(19) Europäisches Patentamt
European Patent Office
Office européen des brevets

(11) **EP 4 358 332 A1**

(12) **EUROPEAN PATENT APPLICATION**

(43) Date of publication:
**24.04.2024 Bulletin 2024/17**

(21) Application number: **23203904.0**

(22) Date of filing: **16.10.2023**

(51) International Patent Classification (IPC):
**H02J 1/00** (2006.01)     **H02J 7/00** (2006.01)

(52) Cooperative Patent Classification (CPC):
**H02J 1/00; H02J 7/0063; H02J 7/00714**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **21.10.2022 US 202217970781**

(71) Applicant: **Acleap Power Inc.**
**112030 Taipei City (TW)**

(72) Inventor: **JOHNSON, Mark A**
**Plano, 75093 (US)**

(74) Representative: **ATIP**
**Armstrong Teasdale Limited**
**38-43 Lincoln's Inn Fields**
**London WC2A 3PE (GB)**

(54) **METHOD AND DEVICE FOR BOOSTING VARIABLE VOLTAGES**

(57)     A method and device for boosting variable voltages are provided. The method for boosting a plant voltage using a variable boost device located at a bottom of a tower that supplies power through a transmission line to a radio device located at a top of the tower includes (1) comparing an output current of the variable boost device against a set of one or more current values, wherein the set of one or more current values represents a range of currents; (2) selecting a voltage value that corresponds to a current value of the set of one or more current values; (3) setting an output voltage of the variable boost device to match the selected voltage value; and repeating the steps (1)-(3).

FIG. 1

Processed by Luminess, 75001 PARIS (FR)

EP 4 358 332 A1

**Description**

**FIELD**

Generally, the present disclosure relates to supplying power from a bottom of a tower to a top of the tower and, more specifically, to a method and device for supplying power to a radio device.

**BACKGROUND**

In wireless applications, a radio device is generally installed on a top of a tower of a base station, where antennas are located. The installation of the radio device adjacent to the antennas on the top of the tower reduces radio frequency (RF) signal transmission losses and noises that may be caused by a transmission line between the top and bottom of the tower. As such, signal quality transmitted and received by the base station having a baseband device located at the top of the tower is significantly improved. For example, an average signal-to-noise ratio (SNR) of RF signals at the radio device adjacent to the antennas on the top of the tower is upgraded compared to that of at a radio device installed at the bottom of the tower. However, because the length of the transmission line between the top and bottom of the tower is generally about 200 feet, or even more, the power supplied by a battery plant located at the bottom of the tower to the radio device on the top of the tower may encounter voltage drops.

Therefore, there is a need to adjust or boost the power voltage to deal with the voltage drops encountered while supplying power from the battery plant at the bottom of the tower to the radio device on the top of the tower so that the radio device operates as designed.

**SUMMARY**

Exemplary embodiments of the present disclosure provide a method for boosting a plant voltage using a variable boost device located at a bottom of a tower that supplies power through a transmission line to a radio device located at a top of the tower. The method includes: (1) comparing an output current of the variable boost device against a set of one or more current values, wherein the set of one or more current values represents a range of currents; (2) selecting a voltage value that corresponds to a current value of the set of one or more current values; (3) setting an output voltage of the variable boost device to match the selected voltage value; and repeating the steps (1)-(3).

The set of one or more current values is preset or given by a user of the variable boost device.

Each current value in the set of one or more current values corresponds to a respective voltage value.

The respective voltage value is based on a voltage value that is calculated according to a resistance of the transmission line.

The respective voltage value is equal to a sum of the plant voltage and the voltage value that is calculated according to the resistance of the transmission line.

The selected voltage value is larger than a maximal power signal voltage of the radio device.

In another exemplary embodiment, the present disclosure further provides a method for boosting a plant voltage using a variable boost device located at a bottom of a tower that supplies power through to a radio device located at a top of the tower. The method further includes: (1) comparing an output of current of a power signal that delivers the plant voltage on a transmission line that connects the variable boost device located at the bottom of the tower to the radio device located at the top of the tower with a Kth current range in a set of current ranges, wherein K is an integer and starts at 1 for the first time; (2) boosting the plant voltage to a Kth voltage value in a voltage range in response to the output of current of the power signal being less than the Kth current range in the set of current ranges; (3) comparing K with N in response to the output of current of the power signal being larger than or equal to the Kth current range in the set of current ranges, wherein N is an integer and is a length of the set of current ranges; (4) setting K to be K + 1 in response to K being different from N; repeating the steps (1)-(4) until K is equal to N, boosting the plant voltage to the Kth voltage value in the voltage range in response to K being equal to N; and (5) setting K to be 1, and repeating the steps (1)-(5), and K is less than or equal to N.

The set of current ranges and the voltage range are preset or given by a user of the variable boost device.

Each current value in a current range corresponds to a respective voltage value in the voltage range.

The respective voltage value in the voltage range is based on a voltage value that is calculated according to a resistance of the transmission line.

The respective voltage value in the voltage range is equal to a sum of the plant voltage and the voltage value that is calculated according to the resistance of the transmission line.

One or more voltage values in the voltage range are larger than a maximal power signal voltage of the radio device.

In another exemplary embodiment, the present disclosure provides a variable boost device for boosting a plant voltage, wherein the variable boost device is located at a bottom of a tower that supplies power through a transmission line to a radio device located at a top of the tower, and wherein the variable boost device comprises one or more processors configured to carry out: (1) comparing an output current of the variable boost device against a set of one or more current values, wherein the set of one or more current values represents a range of currents; (2) selecting a voltage value that corresponds to a current value of the set of one or more current values; (3) setting an output voltage of the variable boost device to match the selected voltage value; and repeating the steps (1)-(3).

## BRIEF DESCRIPTION OF THE DRAWING(S)

FIG. 1 is a schematic diagram of a base station having a tower for transmitting radio frequency (RF) signals from a top of the tower according to an exemplary embodiment of the present disclosure;

FIG. 2 is a schematic diagram of a power supply for a radio device installed on a top of a tower of a base station according to an exemplary embodiment of the present disclosure;

FIG. 3 is a simplified schematic diagram of a power supply for a radio device installed on a top of a tower of a base station according to an exemplary embodiment of the present disclosure;

FIG. 4 is a schematic plot of voltage versus current of a power signal for supplying power to a radio device on a top of a tower of a base station with a single stage boost setpoint according to an exemplary embodiment of the present disclosure;

FIG. 5 is a schematic plot of voltage versus current of a power signal for supplying power to a radio device on a top of a tower of a base station with a triple stage boost setpoint according to an exemplary embodiment of the present disclosure;

FIG. 6 is a schematic flowchart of a method of supplying power to a radio device on a top of a tower from a bottom of the tower along a transmission line that is applicable to single, dual, or multi-stage boost configurations according to an exemplary embodiment of the present disclosure;

FIG. 7 is a schematic flowchart of a method of supplying power to a radio device on a top of a tower from a bottom of the tower along a transmission line that is applicable to single, dual, or multi-stage boost configurations according to an exemplary embodiment of the present disclosure;

FIG. 8 is a schematic flowchart of a method of supplying power to a radio device on a top of a tower from a bottom of the tower along a transmission line that is applicable to single, dual, or multi-stage boost configurations according to an exemplary embodiment of the present disclosure; and

FIG. 9 is a schematic diagram of a structure of a variable boost device according to an exemplary embodiment of the present disclosure.

## DETAILED DESCRIPTION

Exemplary embodiments of the present disclosure provide a method for boosting a plant voltage using a variable boost device located at a bottom of a tower that supplies power to a radio device located at a top of the tower. The method includes receiving a first current value; receiving an output of current of a power signal that delivers the plant voltage on a transmission line that connects the variable boost device located at the bottom of the tower to the radio device located at the top of the tower; and in response to the output of current of the power signal being greater than or equal to the first current value, boosting the plant voltage to a first voltage value.

In general, a wireless system for wireless communications or broadcasting includes one or more base stations. Each base station generally includes a radio device, a baseband device, and one or more antennas. The radio device receives digital information of signals from the baseband device, modulates the digital information of signals into radio frequency (RF) signals and transmits the RF signals through the one or more antennas. Likewise, when working as an RF signal receiver, the radio device receives RF signals through the one or more antennas, demodulates the RF signals into digital information of signals and transmits the digital information of signals to the baseband device for further signal processing of the digital information of signals.

In a modern architecture of the base station, the baseband device is installed at the top of a tower for the base station, while the radio device and the one or more antennas are installed on the top of the tower. For example, the radio device is installed adjacent to the one or more antennas on the top of the tower. Such architecture enables the radio device to significantly improve the quality of the RF signals that it transmits to the one or more antennas, or receives from the one or more antennas. For example, a transmission of RF signals from the radio device at the bottom of the tower to the one or more antennas on the top of the tower along a transmission line could cause transmission losses to and noises in the RF signals. By having the radio device on the top of the tower, the signal transmission losses and noises to the RF signals caused by the transmission line are reduced. Accordingly, the SNR ratio of the RF signals of the base station are upgraded, compared with that of a base station where the radio device is located at the bottom of the tower.

However, this base station architecture having the radio device on the top of the tower requires a direct current (DC) power to be delivered from a battery plant at the bottom of the tower to the radio device on the top of tower over the transmission line. Throughout the power delivery process, a voltage level of a power signal that is output by the battery plant needs to be adjusted to compensate for voltage drops caused by the transmission line. For example, the voltage drops may be caused by the resistance of the transmission line, while the DC power is delivered from the battery plant at the bottom of the tower to the radio device on the top of the tower along the transmission line.

Exemplary embodiments of the present disclosure provide a method for a single stage boosting the voltage level of the power signal that is output by the battery plant at the bottom of the tower, and also, a method for a multiple stage boosting the voltage level of the power signal that is output by the battery plant at the bottom of the tower, in order to deliver the DC power required by the radio device on the top of the tower. Instead of continuously adjusting the voltage level of the power signal that is output by the battery plant, the method disclosed herein requires one or more independent adjustments of the voltage level of the power signal. Hence, the method introduced herein is easier to operate and ensures a more reliable result.

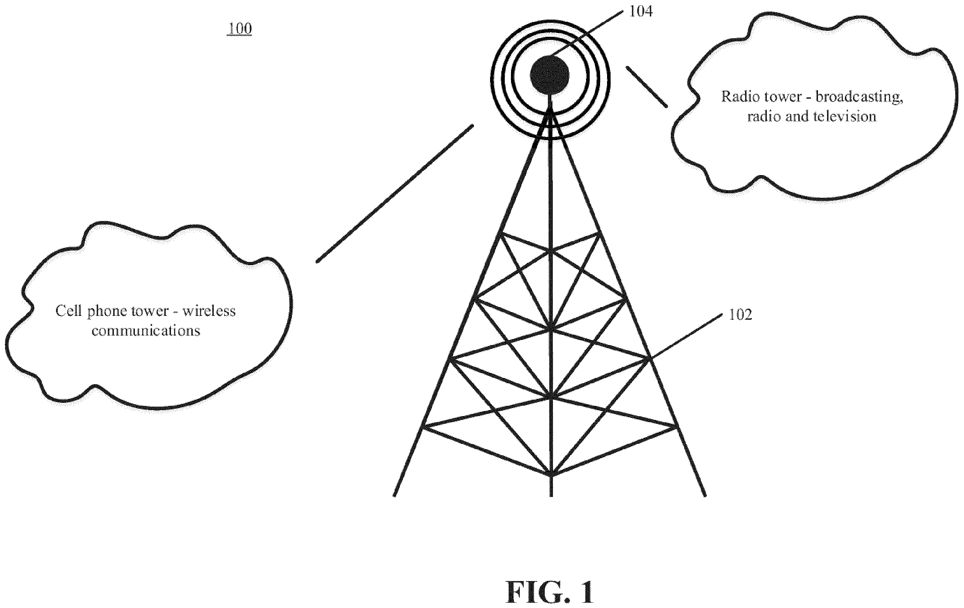

FIG. 1 is a schematic diagram of a base station 100 having a tower 102 for transmitting radio frequency (RF) signals from a top of the tower 102. The RF signals may be used for wireless communications among mobile devices in a wireless communication system. The RF signals also may be used for broadcasting television (TV) or radio programs in civil or certain professional applications. In general, a height of the tower 102 of the base station 100 may be between 100 feet and 200 feet. In some applications, the height of the tower 102 of the base station 100 may be even higher than 200 feet. As shown in FIG. 1, one or more antennas 104 are installed on the top of the tower 102 of the base station 100. The RF signals are transmitted and/or received through the one or more antennas 104.

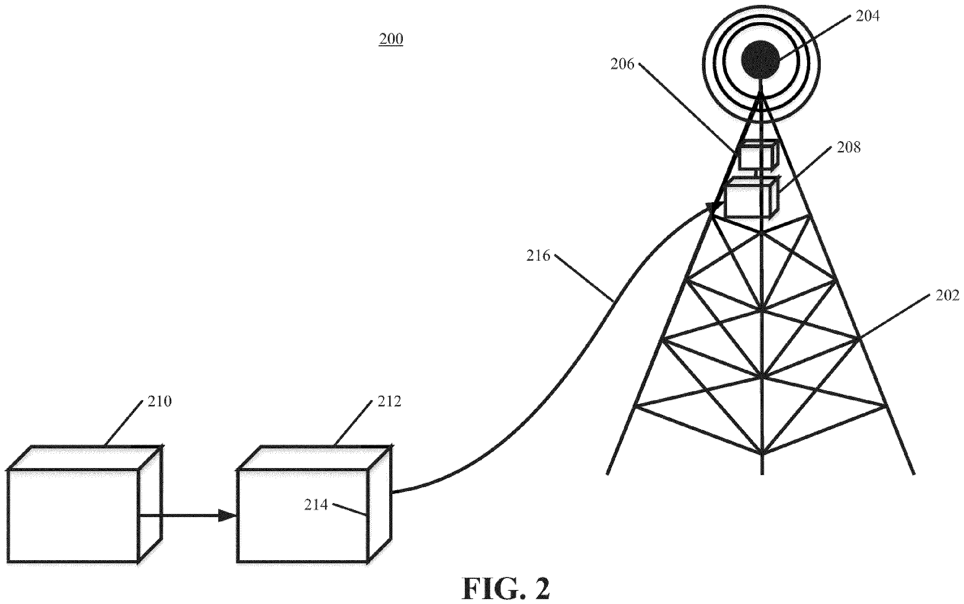

FIG. 2 is a schematic diagram of a power supply for a radio device installed on a top of a tower of a base station 200. As shown, the base station includes a tower 202, on the top of which one or more antennas 204 are installed for transmitting and receiving RF signals, and a radio device 206 are installed as well for modulating digital information of signals into the RF signals and demodulating the RF signals into the digital information of signals. Additionally and/or alternatively, the radio device 206 is installed adjacent to the one or more antennas 204 on the top of the tower 202 of the base station 200.

A baseband device 208 is installed at the top of the tower 202 for processing the digital information of signals. In addition, a battery plant 210 is installed at the bottom of the tower 202 for supplying power to the radio device 206 on the top of the tower 202 so that the radio device 206 operates as designed. A variable boost device 212 is connected to the battery plant 210. The variable boost device 212 boosts plant voltage carried by a power signal that is output by the battery plant 210. For example, the variable boost device 212 may boost the plant voltage carried by the power signal based on a current value given at an output 214 of the variable boost device 212. For example, the variable boost device 212 may boost the plant voltage carried by the power signal one time based on one given current value at the output 214 of the variable boost device 212 or multiple times based on multiple given current values at the output 214 of the variable boost device 212 throughout a process of the battery plant 210 supplying power to the radio device 206.

As shown in FIG. 2, the baseband device 208, the battery plant 210 and the variable boost device 212 are connected to the radio device 206 through a transmission line 216. The transmission line 216 may be a thin gauge wire and/or a coaxial cable that carries the digital information of signals and delivers the power signal as well between the baseband device 208 and the variable boost device 212 and the radio device 206. The transmission line 216 may include a fiber optic cable for carrying the digital information of signals and a separate power cable for delivering the power signal between the baseband device 208 and the variable boost device 212 and the radio device 206.

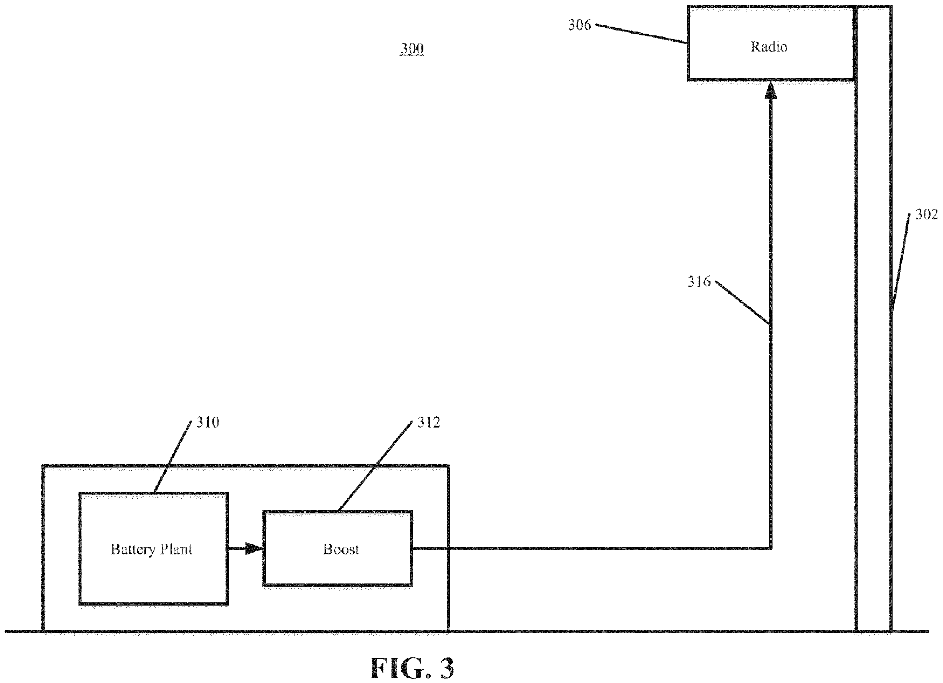

FIG. 3 is a simplified schematic diagram of a power supply for a radio device installed on a top of a tower of a base station 300. As shown, the process by which the battery plant 310 delivers power from the bottom of the tower 302 to the radio device 306 on the top of the tower 302 includes the battery plant 310 outputting the power signal that delivers the plant voltage. The power signal first goes through the variable boost device 312. The power signal then goes along the transmission line 316 to deliver the plant voltage up to the radio device 306 on the top of the tower 302.

According to an exemplary embodiment of the present disclosure, the variable boost device 312 compares one or more given current values with the current of the power signal at multiple stages of the power delivery process. The one or more given current values serve as setpoints for the variable boost device 312 to boost the plant voltage to one or more voltage values. Accordingly, the variable boost device 312 boosts the plant voltage at one stage, or the variable boost device 312 boosts the plant voltage at multiple stages. As such, drops of the plant voltage caused by the transmission line 316 are offset. The one or more given current values and/or the one or more voltage values may be preset.

Generally, the losses caused by the transmission line 316 are calculated according to the following equation:

$$P_{loss} = I^2 \times R, \qquad\qquad \text{Equation 1}$$

where I represents the current that is drawn by the radio device 306 on the top of the tower 302, and R represents the resistance of the transmission line 316.

Accordingly, the plant voltage drops caused by the transmission line 316, for example, by the resistance of the transmission line 316, are calculated according to the following equation:

$$V_{drop} = I \times R, \qquad\qquad \text{Equation 2}$$

where I represents the current that is drawn by the radio device 306 on the top of the tower 302, and R represents the resistance of the transmission line 316.

According to an exemplary embodiment of the present disclosure, if one current of the power signal at one stage during the process of the power delivery is greater than one given current value, the losses caused by the transmission line 316 may be sufficient to cause significant voltage drops of the plant voltage delivered by the power signal. Under this circumstance, the variable boost device 312 boosts the plant voltage to one voltage value. Additionally and/or alternatively, the variable boost device 312 may boost the plant voltage to one voltage value that is higher than an over-voltage shutdown point of the radio device 306 on the top of the tower 302 by approximately 10 Volts. This can be done because the losses caused by the transmission line 316 (calculated by Equation 1) during the power delivery process would reduce the plant voltage to an acceptable level at the radio device 306 on the top of the tower 302.

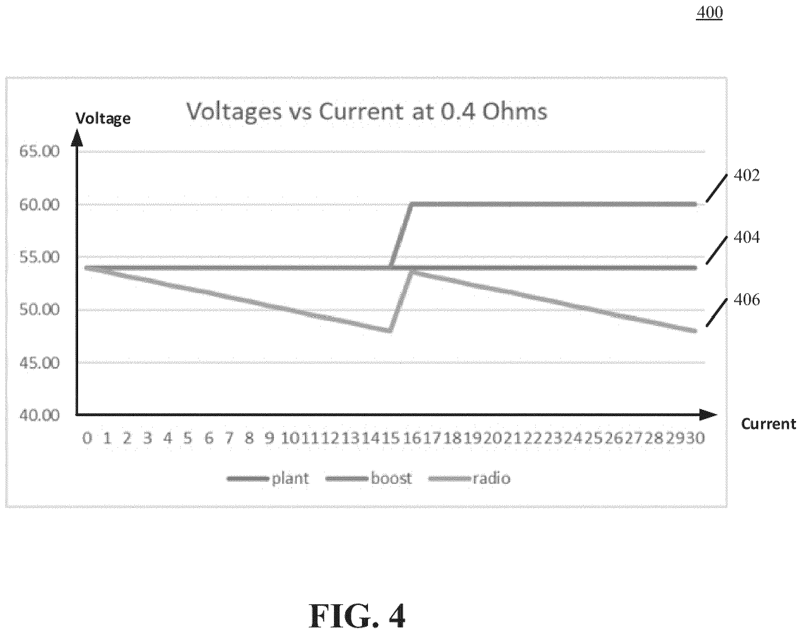

FIG. 4 is a schematic plot 400 of voltage versus current of a power signal for supplying power to a radio device on a top of a tower of a base station with a single stage boost setpoint. As shown in FIG. 4, the schematic diagram 400 of voltage versus current of the power signal is obtained when the resistance of the transmission line 316 shown in FIG. 3 used for connecting the radio device 306 on the top of the tower 302 and the variable boost device 312 at the bottom of the tower 302 is estimated at about 0.4 Ohms. Additionally and/or alternatively, the transmission line 316 shown in FIG. 3 may have different values of resistance.

As shown in FIG. 4, together with FIG. 3, line 404 represents the plant voltage carried by the power signal that is output by the battery plant 310. Line 404 stays flat throughout the delivery of power from the battery plant 310 to the radio device 306. Line 406 represents the actual plant voltage received by the radio device 306. As shown in FIG. 4, during the power delivery process, the actual plant voltage received by the radio device 306 drops to a certain voltage level.

According to an exemplary embodiment of the present disclosure, this plant voltage drop is detected by the variable boost device 312 at the bottom of the tower 302 by comparing an output current of the power signal with a given current value. For example, if the current output of the power signal is high based on the comparison, the power loss caused by the transmission line 316 is high, and the plant voltage carried by the power signal along the transmission line 316 drops significantly. The variable boost device 312 then boosts the plant voltage represented by line 404 to a certain voltage value to obtain a boosted plant voltage 402.

As shown in FIG. 4, line 402 represents such a single-stage boosted plant voltage. The boosted plant voltage represented by line 402 is higher than the flat original plant voltage carried in the power signal output by the battery plant 310. Additionally and/or alternatively, the boosted plant voltage represented by line 402 may be even higher than an over-voltage shutdown point of the radio device 306 on the top of the tower 302, for example, by approximately 10 Volts, to offset any possible voltage drops over further process of the power delivery along the transmission line 316. As such, a single stage plant voltage boosting is completed.

Referring back to FIG. 3, at the same time, if one power signal current at one stage during the process of the power delivery is less than or equal to one given current value, it shows that the power signal current is too low. Under this circumstance, the power signal that is output by the battery plant 310 and carries the plant voltage may simply pass through the variable boost device 312, as shown in FIG. 3. This prevents the variable boost device 312 from boosting the plant voltage at low power signal current so that a shutdown at the radio device 306 on the top of the tower 302 is avoided. This is because, if the plant voltage is boosted unnecessarily high by the variable boost device 312, the losses caused by the transmission line 316 calculated by Equation 1 would not reduce the plant voltage to an acceptable level at the radio device 306 even after going through the further power delivery process.

According to an exemplary embodiment of this disclosure, the variable boost device 312 may boost the plant voltage at multiple stages. That is, the variable boost device 312 compares one or more given current values with the current of the power signal at multiple stages during the power delivery process. Based on some of these comparisons, the power signal that is output by the battery plant 310 and carries the plant voltage may simply pass through the variable boost device 312. Based on some of these comparisons, the variable boost device 312 may boost the plant voltage carried by the power signal to a voltage value. In some situations, the variable boost device 312 may boost the plant voltage carried by the power signal to voltage values one after another based on more than one comparisons, and thereby, a multi-stage plant voltage boosting mechanism is formed.

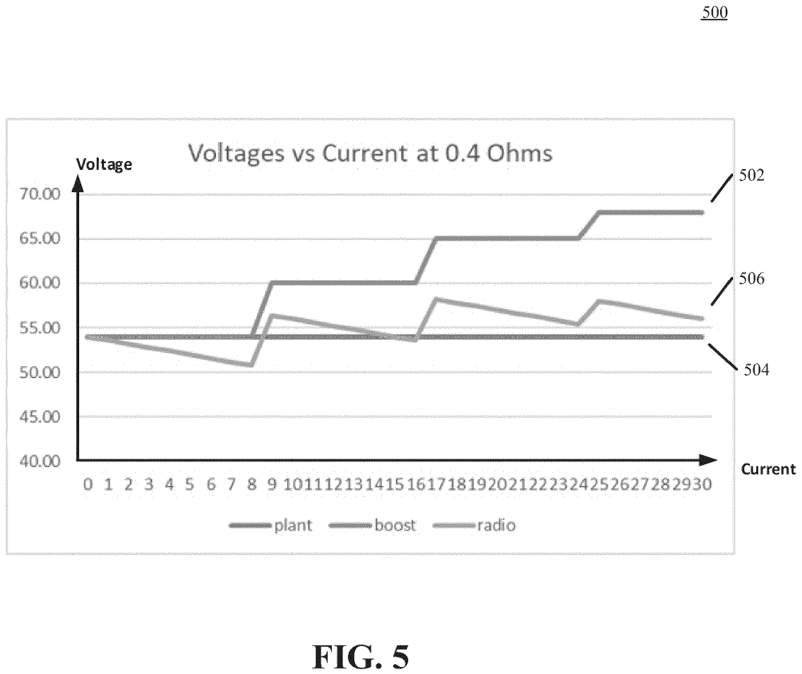

FIG. 5 is a schematic plot 500 of voltage versus current of a power signal for supplying power to a radio device on a top of a tower of a base station with a triple stage boost setpoint. As shown in FIG. 5, the schematic plot 500 of voltage versus current of the power signal is obtained when the resistance of the transmission line 316 shown in FIG. 3 used for connecting the radio device 306 on the top of the tower 302 and the variable boost device 312 at the bottom of the tower 302 is estimated at about 0.4 Ohms. Additionally and/or alternatively, the transmission line 316 shown in FIG. 3 may have different resistance values.

As shown in FIG. 5, together with FIG. 3, line 504 represents the plant voltage carried in the power signal output by the battery plant 310, line 506 represents the actual plant voltage received by the radio device 306, and line 502 represents a multi-stage boosted plant voltage. At each stage, the variable boost device 312 compares an output current of the power signal with a given current value, and then, boosts the plant voltage represented by line 504 to a certain voltage value to obtain the boosted plant voltage represented by line 502. This process repeats, and then, a multi-stage plant voltage boosting is completed. This process may repeat for three times, and then, a triple-stage plant voltage boosting is completed, as shown in FIG. 5. Additionally and/or alternatively, this process may also repeat for two times, or for more than three times.

In some exemplary applications, after the plant voltage is boosted according to the above-described process, the current drawn by the radio device 306 on the top of the tower 302 may reduce. Accordingly, the variable boost device 312 may reduce the plant voltage based on the given current-to-voltage mapping. This design prevents the plant voltage from being boosted to an unnecessary high level and causing an over-voltage shutdown of the radio device 306 on the top of the tower 302.

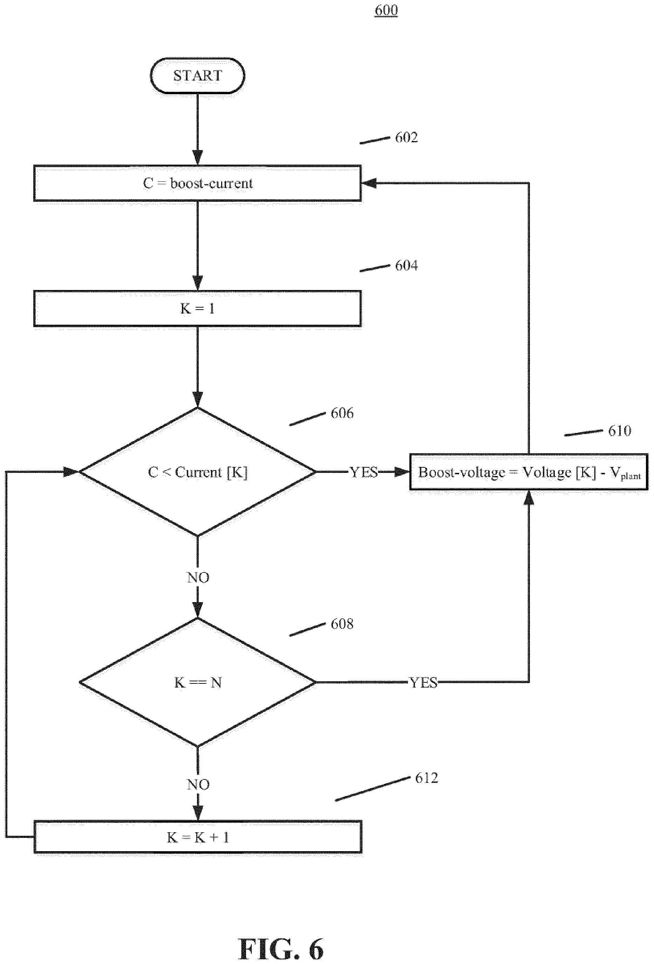

FIG. 6 is a schematic flowchart of a method of supplying power to a radio device on a top of a tower from a bottom of the tower along a transmission line that is applicable to single, dual, or multi-stage boost configurations. As shown in FIG. 6, the method 600 starts with a given data structure. In some exemplary applications, a current range is given. For example, the current range may be represented as Current [N], and the current range includes N current values and/or N current ranges (a set of N current ranges), namely, Current [N] = $\{A_1, A_2, ..., A_N\}$. Accordingly, a voltage range is also given. For example, the voltage range may be represented as Voltage [N], and the voltage range includes N voltage values, namely, Voltage [N] = $\{V_1, V_2, ..., V_N\}$. Accordingly, the length of the current range, i.e., current values and/or current ranges (a set of current ranges) is N, N is an integer and equal to or larger than 1. Further, each of the N current values ($A_i$) corresponds to a respective voltage value ($V_i$) of the N voltage values, i is an integer and equal to or larger than 1.

In general, a relationship between $A_i$ and $V_i$ can be made according to the following equation:

$$V_i = V_{plant} + (A_i \times R), \hspace{3cm} \text{Equation 3}$$

where $V_{plant}$ represents the plant voltage carried by the power signal along the transmission line, and R represents the transmission line resistance in Ohms.

$V_i$ should be the target output voltage of the boost device for the current range sub i. The variable boost device 312 as shown in FIG. 3 attempts to deliver this by calculating the necessary boost voltage $V_{boost} = V_i - V_{plant}$. This accommodates variation in $V_{plant}$ such as when the battery plant 310 as shown in FIG. 3 is running off battery. The voltage of the variable boost device 312 as measured at its output terminals will be $V_{plant} + V_{boost}$.

For example, a current value $A_i$ may be less than 5 Amps and a corresponding voltage value $V_i$ may be the plant voltage + 0 Volt. In some exemplary applications, a current value $A_i$ may be between 10 to 15 Amps and a corresponding voltage value $V_i$ may be the plant voltage + 15 Amps $\times$ line resistance. In some exemplary applications, a current value $A_i$ may be between 15 Amps and 20 Amps and a corresponding voltage value $V_i$ may be the plant voltage + 20 Amps $\times$ line resistance. In some exemplary applications, a current value $A_i$ may be between 20 Amps and 30 Amps and a corresponding voltage value $V_i$ may be the plant voltage + 30 Amps $\times$ line resistance. For example, if the output of current of the power signal is 15 Amps, the variable boost device boosts the plant voltage to a sum of the plant voltage and 6 Volts, namely, by 6 Volts, when using exemplary line resistance of 0.4 Ohms. For example, if the power signal output current is 20 Amps, the variable boost device boosts the plant voltage to a sum of the plant voltage and 8 Volts, namely, by 8 Volts, when using exemplary line resistance of 0.4 Ohms.

According to an exemplary embodiment of this disclosure, the method 600 for supplying power to the radio device on the top of the tower from the bottom of the tower along the transmission line is applicable to single, dual, or multi-stage boost configurations. According to the schematic flowchart shown in FIG. 6, a variable boost device located at a bottom of a tower shown as 212 in FIG. 2 and as 312 in FIG. 3 performs the method 600 for boosting a plant voltage that supplies power to a radio device located at a top of the tower. As shown in FIG. 6, the method 600 includes the following steps.

First, the variable boost device at 602 receives an output of current of a power signal that carries the plant voltage along the transmission line.

Second, the variable boost device at 606 compares this output of current of the power signal with the first current value in the current range, which is provided as the data structure. For example, as shown at 604, K is now used and starts at 1. Further, K is an integer and K is less than or equal to N. That is, the output of current of the power signal is compared with Current [K].

Third, if the output of current of the power signal is less than the first current value in the current range, namely, Current [K], the variable boost device at 610 boosts the plant voltage to the first voltage value in the voltage range, which is provided as the data structure, namely, Voltage [K]. That is, the variable boost device at 610 boosts the plant voltage by Voltage [K] - the plant voltage ($V_{plant}$).

If the output of current of the power signal is larger than or equal to the first current value in the current range, namely, Current [K], the variable boost device at 608 further compares K with N to determine whether K is equal to N.

If the variable boost device determines that K is equal to N, the variable boost device at 610 boosts the plant voltage to the Kth voltage value in the voltage range, namely, Voltage [K] or Voltage [N]. This means, K reaches the length of the current range, i.e., N. This also means, the variable boost device at 610 boosts the plant voltage to the last voltage value in the voltage range.

If the variable boost device determines that K is not equal to N, that means, K has not reached the length of the current range, i.e., N. Under that circumstance, the variable boost device at 612 sets K to be K+1, and then, further compares the output of current of the power signal with Current [K], as described at 606. That is, the above-described steps will be repeated until K is equal to N.

For example, the variable boost device may compare the output of current of the power signal with N current values in the current range for N times. Accordingly, the variable boost device may boost the plant voltage to N voltage values in the voltage range for N times. In general, if K reaches the length of the current range, i.e., N, the variable boost device boosts the plant voltage to the last voltage value in the voltage range, namely, Voltage [K] or Voltage [N].

Once K reaches the length of the current range, i.e., N, and after the variable boost device boosts the plant voltage to the last voltage value in the voltage range (Voltage [K] or Voltage [N]), K is reset to 1. The variable boost devices further compares an output of current of the power signal against Current [K], and then, the variable boost device boosts the plant voltage to a corresponding voltage value, Voltage [K]. That is, the steps 606, 610, 608 and 612 would repeat.

As such, based on the value of N, namely, the length of the current range, single, dual, or multi-stage boost configurations for supplying the plant voltage to the radio device on the top of the tower are achieved. Further, based on the design of the method and device described herein, the plant voltage is boosted independently each time rather than continuously even if in a dual-stage or a multi-stage boost configuration. Accordingly, a more reliable boosted planet voltage can be expected each time.

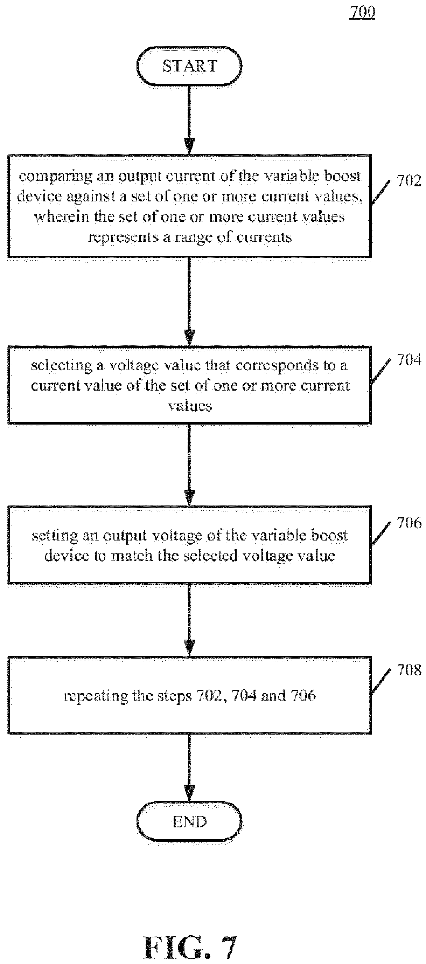

FIG. 7 is a schematic flowchart of a method of supplying power to a radio device on a top of a tower from a bottom of the tower along a transmission line that is applicable to single, dual, or multi-stage boost configurations. According to the schematic flowchart shown in FIG. 7, a variable boost device located at a bottom of a tower shown as 212 in FIG. 2 and as 312 in FIG. 3 performs a method 700 for boosting a plant voltage that supplies power to a radio device located at a top of the tower. As shown in FIG. 7, the method 700 basically includes 4 steps as follows.

At step 702, the variable boost device compares an output current of the variable boost device against a set of one or more current values. The set of one or more current values represents a range of currents.

At step 704, the variable boost device selects a voltage value that corresponds to a current value of the set of one or more current values.

At step 706, the variable boost device sets an output voltage of the variable boost device to match the selected voltage value.

At step 708, the variable boost device repeats the above-described steps 702, 704 and 706.

As such, a multi-stage plant voltage boosting mechanism is formed. The variable boost device compares multiple power signal output currents with multiple current values. Based on these comparisons, the variable boost device boosts the plant voltage carried by the power signal to multiple voltage values. As discussed above, the multiple voltage values correspond to the multiple current values, respectively.

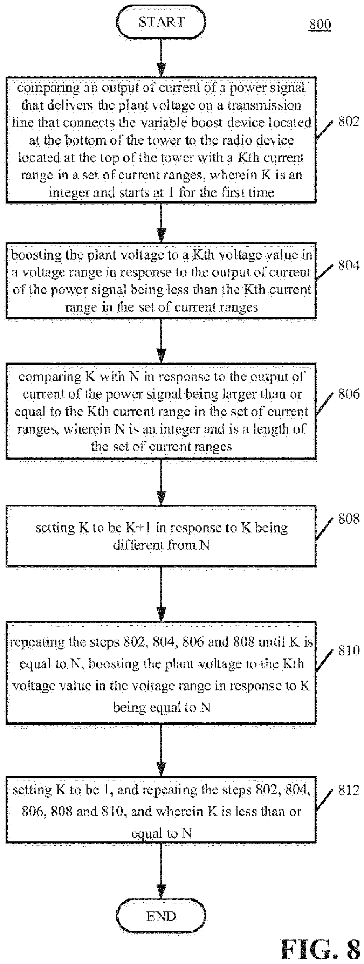

FIG. 8 is a schematic flowchart of a method of supplying power to a radio device on a top of a tower from a bottom of the tower along a transmission line that is applicable to single, dual, or multi-stage boost configurations. According to the schematic flowchart shown in FIG. 8, a variable boost device located at a bottom of a tower shown as 212 in FIG. 2 and as 312 in FIG. 3 performs a method 800 for boosting a plant voltage that supplies power to a radio device located at a top of the tower. As shown in FIG. 8, the method 800 basically includes 5 steps as follows.

At step 802, the variable boost device compares an output of current of a power signal that delivers the plant voltage on a transmission line that connects the variable boost device located at the bottom of the tower to the radio device located at the top of the tower with a Kth current range in a set of current ranges.

At step 804, the variable boost device boosts the plant voltage to a Kth voltage value in a voltage range in response to the output of current of the power signal being less than the Kth current range in the set of current ranges.

In an exemplary embodiment of the present disclosure, the current range and the voltage range may be preset. The current range and the voltage range may be also given by a user of the variable boost device. Further, each current value in the current range corresponds to a respective voltage value in the voltage range.

For example, the respective voltage value in the voltage range is based on a voltage value that is calculated according to a resistance of the transmission line. For example, the respective voltage value in the voltage range is equal to a sum of the plant voltage and the voltage value that is calculated according to the resistance of the transmission line, as expressed in Equation 3.

In an exemplary embodiment of the present disclosure, one or more voltage values in the voltage range may be larger than a maximal power signal voltage of the radio device by up to approximately 10 Volts.

At step 806, the variable boost device compares K with N in response to the output of current of the power signal being larger than or equal to the Kth current range in the set of current ranges.

In an exemplary embodiment of the present disclosure, K and N are integers, K starts at 1 for the first time and is less than or equal to N, and N is a length of the set of current ranges.

At step 808, the variable boost device sets K to be K+1 in response to K being different from N.

At step 810, the variable boost device repeats the steps 802, 804, 806 and 808 until K is equal to N. The variable boost device boosts the plant voltage to the Kth voltage value in the voltage range when K is equal to N. At this point, K reaches the length of the set of current ranges, i.e., N. This means, the variable boost device boosts the plant voltage to the last voltage value in the voltage range.

At step 812, the variable device sets K to be 1, and then, repeats the steps 802, 804, 806, 808 and 810.

As such, based on the value of N, namely, the length of the set of current ranges, the variable boost device may boost the plant voltage to a voltage value in the voltage range once, for two times, or for multiple times. Further, each boost of the plant voltage is made independently rather than continuous adjustments of the plant voltage. Thus, the method and device described herein provide a more reliable result in boosting the plant voltage.

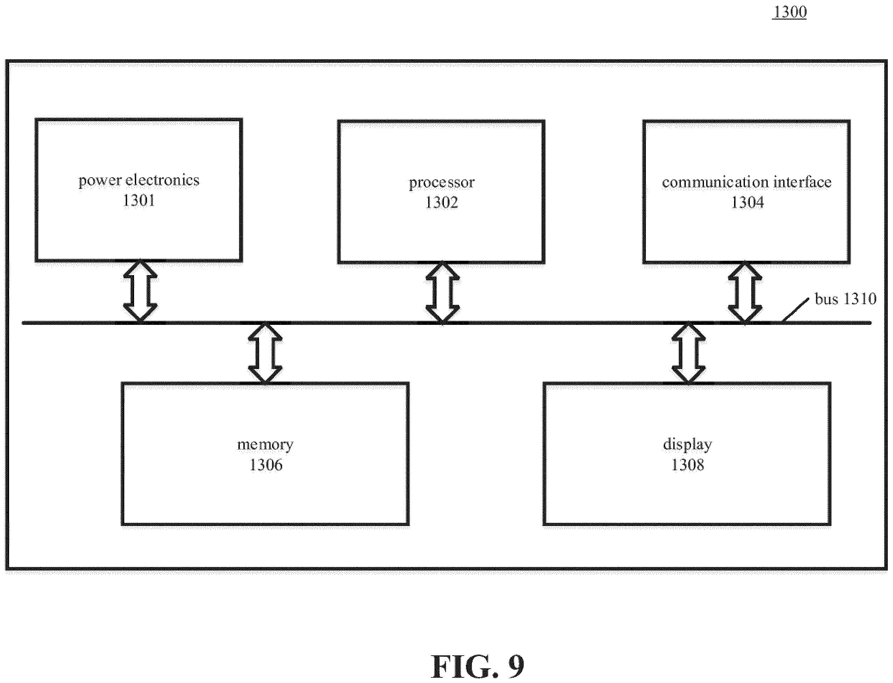

FIG. 9 is a schematic diagram of a structure 1300 of a variable boost device. According to the schematic diagram shown in FIG. 9, the variable boost device located at a bottom of a tower is shown as 212 in FIG. 2 and as 312 in FIG. 3. The variable boost device performs a method shown as 700 in FIG. 7 and 800 in FIG. 8 for boosting a plant voltage that supplies power to a radio device located at a top of the tower.

As shown in FIG. 9, the structure 1300 of the variable boost device includes a bus 1310, power electronics 1301, a processor 1302, a communication interface 1304 and a memory 1306. Additionally and/or alternatively, the structure 1300 of the variable boost device may further include a display 1308. For example, the display 1308 may show various values received by the variable boost device, or various values entered by a user to the variable boost device. The display 1308 may also show various values that are output by the variable boost device to boost the plant voltage for supplying power to the radio device on the top of the tower through the transmission line. Further, the processor 1302, the communication interface 1304, the memory 1306 and the display 1308 may communicate with each other through the bus 1310.

Generally, the power electronics 1301 deals with control and conversion of power in its electric form. For example, the power electronics 1301 deals with processing of high voltages and currents to deliver power that supports variety of needs. The power electronics 1301 in the structure 1300 of the variable boost device enables the plant voltage carried by the power signal to be boosted to multiple desired levels. As such, a stable and reliable power can be expected at the radio device on the top of the tower.

The processor 1302 may include one or more general-purpose processors, such as a central processing unit (CPU), or a combination of a CPU and a hardware chip. The hardware chip may be an application-specific integrated circuit (ASIC), a programmable logic device (PLD), or a combination thereof. The PLD may be a complex programmable logic device (CPLD), a field-programmable gate array (FPGA), generic array logic (GAL), or any combination thereof.

The memory 1306 may include a volatile memory, for example, a random access memory (RAM). The memory 1306 may further include a non-volatile memory (NVM), for example, a read-only memory (ROM), a flash memory, a hard disk drive (HDD), or a solid-state drive (SSD). The memory 1306 may further include a combination of the foregoing types.

The memory 1306 may have computer-readable program codes stored thereon. The processor 1302 may read the computer-readable program codes stored on the memory 1306 to implement the methods 700 shown in FIG. 7 and 800 shown in FIG. 8 described above to boost the plant voltage that is carried by the power signal for supplying power to the radio device on the top of the tower. Additionally and/or alternatively, the processor 1302 may read the computer-readable program codes stored on the memory 1306 to implement one or more other functions, a combination of these functions.

The processor 1302 may further communicate with another computing device through the communication interface 1304. For example, the processor 1302 may further communicate with the battery plant shown as 210 in FIG. 2 and as 310 in FIG. 3 for receiving the plant voltage carried by the power signal that is output by the battery plant. For example, the processor 1302 may further communicate with the radio device on the top of the tower as 206 in FIG. 2 and as 306 in FIG. 3 to provide the boosted plant voltage for a proper operation of the radio device. For example, the processor 1302 may further receive the current information that is demanded by the radio device on the top of the power.

With the current information, the processor 1302 may modify a current value accordingly, to which the plant voltage is to be boosted.

The processor 1302 may further trigger the display 1308 to display information to a user. For example, the processor 1302 may trigger the display 1308 to display one or more current values and/or one or more voltage values. As described above, these values may be preset. In some exemplary embodiments, one current value corresponds to one voltage value. A power signal output current is first compared to one current value, and then, the plant voltage carried by the power signal may be boosted to one voltage value corresponding to that current value based on the comparison. In some exemplary embodiments, the one or more voltage values may be modified based on the current information that is demanded by the radio device. In some exemplary embodiments, the one or more voltage values may be modified based on the up-to-date status of the power supply for the radio device through the updated output of current of the power signal. For example, the processor 1302 may trigger the display 1308 to display a real time status of the process of the power supply up to the radio device on the top of the tower. The real time status may include how much the plant voltage is boosted, or how many times the plant voltage is boosted, as shown in FIG. 4 or FIG. 5.

A person of ordinary skill in the art will appreciate that the structure 1300 of the variable boost device as shown in FIG. 9 may communicate with one or more further computing devices through the communication interface 1304 or wireless connections for further functions, or a combination of functions. The structure 1300 of the variable boost device as shown in FIG. 9 may also include one or more further functional components to perform and/or trigger further functions, or a combination of functions.

The use of the terms "a" and "an" and "the" and "at least one" and similar referents in the context of describing the invention (especially in the context of the following claims) are to be construed to cover both the singular and the plural, unless otherwise indicated herein or clearly contradicted by context. The use of the term "at least one" followed by a list of one or more items (for example, "at least one of A and B") is to be construed to mean one item selected from the listed items (A or B) or any combination of two or more of the listed items (A and B), unless otherwise indicated herein or clearly contradicted by context. The terms "comprising," "having," "including," and "containing" are to be construed as open-ended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the disclosure and does not pose a limitation on the scope of the disclosure unless otherwise claimed. No language in the specification should be construed. as indicating any non-claimed element as essential to the practice of the disclosure.

Exemplary embodiments of the present disclosure are described herein, including the best mode known to the inventors for carrying out the disclosure. Variations of those exemplary embodiments may become apparent to those of ordinary skill in the art upon reading the foregoing description. The inventors expect skilled artisans to employ such variations as appropriate, and the inventors intend for the disclosure to be practiced otherwise than as specifically described herein. Accordingly, this disclosure includes all modifications and equivalents of the subject matter recited in the claims appended hereto as permitted by applicable law. Moreover, any combination of the above-described elements in all possible variations thereof is encompassed by the disclosure unless otherwise indicated herein or otherwise clearly contradicted by context.

The following clauses represent features of the invention.

Feature 1. A method for boosting a plant voltage using a variable boost device located at a bottom of a tower that supplies power through a transmission line to a radio device located at a top of the tower, comprising:

(1) comparing an output current of the variable boost device against a set of one or more current values, wherein the set of one or more current values represents a range of currents;
(2) selecting a voltage value that corresponds to a current value of the set of one or more current values;
(3) setting an output voltage of the variable boost device to match the selected voltage value; and

repeating the steps (1)-(3).

Feature 2. The method according to feature 1, wherein the set of one or more current values is preset or given by a user of the variable boost device.

Feature 3. The method according to feature 1, wherein each current value in the set of one or more current values corresponds to a respective voltage value.

Feature 4. The method according to feature 3, wherein the respective voltage value is based on a voltage value that is calculated according to a resistance of the transmission line.

Feature 5. The method according to feature 4, wherein the respective voltage value is equal to a sum of the plant voltage and the voltage value that is calculated according to the resistance of the transmission line.

Feature 6. The method according to feature 1, wherein the selected voltage value is larger than a maximal power signal voltage of the radio device.

Feature 7. A method for boosting a plant voltage using a variable boost device located at a bottom of a tower that supplies power to a radio device located at a top of the tower, comprising:

    (1) comparing an output of current of a power signal that delivers the plant voltage on a transmission line that connects the variable boost device located at the bottom of the tower to the radio device located at the top of the tower with a Kth current range in a set of current ranges, wherein K is an integer and starts at 1 for the first time;
    (2) boosting the plant voltage to a Kth voltage value in a voltage range in response to the output of current of the power signal being less than the Kth current range in the set of current ranges;
    (3) comparing K with N in response to the output of current of the power signal being larger than or equal to the Kth current range in the set of current ranges, wherein N is an integer and is a length of the set of current ranges;
    (4) setting K to be K + 1 in response to K being different from N;
    repeating the steps (1)-(4) until K is equal to N, boosting the plant voltage to the Kth voltage value in the voltage range in response to K being equal to N; and
    (5) setting K to be 1, and repeating the steps (1)-(5), and
    wherein K is less than or equal to N.

Feature 8. The method according to feature 7, wherein the set of current ranges and the voltage range are preset or given by a user of the variable boost device.

Feature 9. The method according to feature 7, wherein each current value in a current range corresponds to a respective voltage value in the voltage range.

Feature 10. The method according to feature 9, wherein the respective voltage value in the voltage range is based on a voltage value that is calculated according to a resistance of the transmission line.

Feature 11. The method according to feature 10, wherein the respective voltage value in the voltage range is equal to a sum of the plant voltage and the voltage value that is calculated according to the resistance of the transmission line.

Feature 12. The method according to feature 7, wherein one or more voltage values in the voltage range are larger than a maximal power signal voltage of the radio device.

Feature 13. A variable boost device for boosting a plant voltage, wherein the variable boost device is located at a bottom of a tower that supplies power through a transmission line to a radio device located at a top of the tower, and wherein the variable boost device comprises one or more processors configured to carry out:

    (1) comparing an output current of the variable boost device against a set of one or more current values, wherein the set of one or more current values represents a range of currents;
    (2) selecting a voltage value that corresponds to a current value of the set of one or more current values;
    (3) setting an output voltage of the variable boost device to match the selected voltage value; and

repeating the steps (1)-(3).

Feature 14. The device according to feature 13, wherein the set of one or more current values is preset or given by a user of the variable boost device.

Feature 15. The device according to feature 13, wherein each current value in the set of one or more current values corresponds to a respective voltage value.

Feature 16. The device according to feature 15, wherein the respective voltage value is based on a voltage value that is calculated according to a resistance of the transmission line.

Feature 17. The device according to feature 16, wherein the respective voltage value is equal to a sum of the plant voltage and the voltage value that is calculated according to the resistance of the transmission line.

Feature 18. The device according to feature 13, wherein the selected voltage value is larger than a maximal power signal voltage of the radio device.

**Claims**

1. A method (700) for boosting a plant voltage using a variable boost device (212, 312) located at a bottom of a tower (102, 202, 302) that supplies power through a transmission line (216, 316) to a radio device (206, 306) located at a top of the tower, the method comprising:

   (1) (702) comparing an output current of the variable boost device against a set of one or more current values, wherein the set of one or more current values represents a range of currents;
   (2) (704) selecting a voltage value that corresponds to a current value of the set of one or more current values;
   (3) (706) setting an output voltage of the variable boost device to match the selected voltage value; and

   (708) repeating the steps (1)-(3).

2. The method according to claim 1, wherein the set of one or more current values is preset or given by a user of the variable boost device.

3. The method according to any one of claims 1 or 2, wherein each current value in the set of one or more current values corresponds to a respective voltage value.

4. The method according to claim 3, wherein the respective voltage value is based on a voltage value that is calculated according to a resistance of the transmission line.

5. The method according to claim 4, wherein the respective voltage value is equal to a sum of the plant voltage and the voltage value that is calculated according to the resistance of the transmission line.

6. The method according to any one of claims 1 to 5, wherein the selected voltage value is larger than a maximal power signal voltage of the radio device.

7. A variable boost device (212, 312) for boosting a plant voltage, wherein the variable boost device is located at a bottom of a tower (102, 202, 302) that supplies power through a transmission line (216, 316) to a radio device (206, 306) located at a top of the tower, and wherein the variable boost device comprises one or more processors configured to carry out:

   (1) comparing an output current of the variable boost device against a set of one or more current values, wherein the set of one or more current values represents a range of currents;
   (2) selecting a voltage value that corresponds to a current value of the set of one or more current values;
   (3) setting an output voltage of the variable boost device to match the selected voltage value; and

   repeating the steps (1)-(3).

8. The variable boost device according to claim 7 , wherein the set of one or more current values is preset or given by a user of the variable boost device.

9. The variable boost device according to any one of claims 7 or 8, wherein each current value in the set of one or more current values corresponds to a respective voltage value.

10. The variable boost device according to claim 9 , wherein the respective voltage value is based on a voltage value that is calculated according to a resistance of the transmission line.

**11.** The variable boost device according to claim 10 , wherein the respective voltage value is equal to a sum of the plant voltage and the voltage value that is calculated according to the resistance of the transmission line.

**12.** The variable boost device according to any one of claims 7-11, wherein the selected voltage value is larger than a maximal power signal voltage of the radio device.

EP 4 358 332 A1

100

104

Radio tower - broadcasting, radio and television

Cell phone tower - wireless communications

102

**FIG. 1**

**FIG. 2**

EP 4 358 332 A1

300

FIG. 3

EP 4 358 332 A1

400

Voltages vs Current at 0.4 Ohms

Voltage

65.00

60.00 — 402

55.00 — 404

50.00

45.00 — 406

40.00

Current

0 1 2 3 4 5 6 7 8 9 10 11 12 13 14 15 16 17 18 19 20 21 22 23 24 25 26 27 28 29 30

plant  boost  radio

EP 4 358 332 A1

FIG. 4

FIG. 5

EP 4 358 332 A1

600

**FIG. 6**

700

START

comparing an output current of the variable boost device against a set of one or more current values, wherein the set of one or more current values represents a range of currents 702

selecting a voltage value that corresponds to a current value of the set of one or more current values 704

setting an output voltage of the variable boost device to match the selected voltage value 706

repeating the steps 702, 704 and 706 708

END

# FIG. 7

START     <u>800</u>

comparing an output of current of a power signal that delivers the plant voltage on a transmission line that connects the variable boost device located at the bottom of the tower to the radio device located at the top of the tower with a Kth current range in a set of current ranges, wherein K is an integer and starts at 1 for the first time    802

boosting the plant voltage to a Kth voltage value in a voltage range in response to the output of current of the power signal being less than the Kth current range in the set of current ranges    804

comparing K with N in response to the output of current of the power signal being larger than or equal to the Kth current range in the set of current ranges, wherein N is an integer and is a length of the set of current ranges    806

setting K to be K+1 in response to K being different from N    808

repeating the steps 802, 804, 806 and 808 until K is equal to N, boosting the plant voltage to the Kth voltage value in the voltage range in response to K being equal to N    810

setting K to be 1, and repeating the steps 802, 804, 806, 808 and 810, and wherein K is less than or equal to N    812

END

# FIG. 8

EP 4 358 332 A1

**FIG. 9**

Europäisches
Patentamt
European
Patent Office
Office européen
des brevets

# EUROPEAN SEARCH REPORT

Application Number

EP 23 20 3904

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/164355 A1 (WINKLER DAVID [US] ET AL) 14 June 2018 (2018-06-14) * paragraphs [0003] - [0128]; figures 1/17-17/17 * | 1-12 | INV. H02J1/00 H02J7/00 |
| A | US 2018/131440 A1 (PATEL SAMMIT [US] ET AL) 10 May 2018 (2018-05-10) * paragraphs [0002] - [0031]; figures 1/16-16/16 * | 1-12 | |
| A | US 2017/331326 A1 (HANLEY JOHN T [US]) 16 November 2017 (2017-11-16) * paragraphs [0002] - [0030]; figures 1/16-16/16 * | 1-12 | |
| A | US 10 727 740 B1 (FISCHER STEVE [US]) 28 July 2020 (2020-07-28) * columns 1,2; figures 1/6-6/6 * | 1-12 | |
| A | US 11 102 665 B2 (T MOBILE USA INC [US]) 24 August 2021 (2021-08-24) * columns 1-15; figures 1-7 * | 1-12 | TECHNICAL FIELDS SEARCHED (IPC) |
| A | US 10 470 120 B2 (T MOBILE USA INC [US]) 5 November 2019 (2019-11-05) * columns 1-7; figures 1-5 * | 1-12 | H02J |

The present search report has been drawn up for all claims

| Place of search | Date of completion of the search | Examiner |
|---|---|---|
| Munich | 8 March 2024 | Krasser, Bernhard |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
 
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 23 20 3904

This annex lists the patent family members relating to the patent documents cited in the above-mentioned European search report.
The members are as contained in the European Patent Office EDP file on
The European Patent Office is in no way liable for these particulars which are merely given for the purpose of information.

08-03-2024

| Patent document cited in search report | | Publication date | Patent family member(s) | | | Publication date |
|---|---|---|---|---|---|---|
| US 2018164355 | A1 | 14-06-2018 | NONE | | | |
| US 2018131440 | A1 | 10-05-2018 | NONE | | | |
| US 2017331326 | A1 | 16-11-2017 | AU | 2017263347 | A1 | 22-11-2018 |
| | | | CN | 109314542 | A | 05-02-2019 |
| | | | EP | 3455638 | A1 | 20-03-2019 |
| | | | ES | 2867001 | T3 | 20-10-2021 |
| | | | US | 2017331326 | A1 | 16-11-2017 |
| | | | WO | 2017196915 | A1 | 16-11-2017 |
| US 10727740 | B1 | 28-07-2020 | NONE | | | |
| US 11102665 | B2 | 24-08-2021 | US | 2019268786 | A1 | 29-08-2019 |
| | | | US | 2021385673 | A1 | 09-12-2021 |
| US 10470120 | B2 | 05-11-2019 | EP | 3753210 | A1 | 23-12-2020 |
| | | | US | 2019289541 | A1 | 19-09-2019 |
| | | | WO | 2019178285 | A1 | 19-09-2019 |

EPO FORM P0459

For more details about this annex : see Official Journal of the European Patent Office, No. 12/82